Europäisches Patentamt

European Patent Office

Office européen des brevets

(11) Publication number: **0 434 122 A1**

# EUROPEAN PATENT APPLICATION

(21) Application number: 90203259.8

(22) Date of filing: 12.12.90

(51) Int. Cl.5: **G01C 21/20**

(30) Priority: **18.12.89 NL 8903085**

(43) Date of publication of application:
**26.06.91 Bulletin 91/26**

(84) Designated Contracting States:
**AT BE CH DE DK ES FR GB GR IT LI LU NL SE**

(71) Applicant: PROJECTENBURO INNOSOFT B.V.
Stationsstraat 28
NL-5261 VB Vught(NL)

(72) Inventor: **Reuvers, Paulus Antonius Henricus Johannes**
**Projectenburo Innosoft B.V., Stationsstraat 28**
**NL-5261 VB Vught(NL)**

(74) Representative: **Fieret, Johannes, Ir. et al**
**c/o Algemeen Octrooibureau P.O.Box 645**
**NL-5600 AP Eindhoven(NL)**

(54) Method of displaying driving information intended for a driver of a vehicle on a display in said vehicle.

(57) Method of displaying driving information intended for a driver of a vehicle on a display in the vehicle comprising the displaying of a relevant part of a road map, and the displaying of designations indicating respective roads of the road map horizontally outside of the displayed part of the road map. The designations may concern the next intersecting road on the left and the next intersecting road on the right, which are displayed on the left and on the right, respectively, or a next intersecting road which the driver may not turn into and a next intersecting road which the driver may turn into, which are displayed in different colours.

Fig.2.

Xerox Copy Centre

# METHOD OF DISPLAYING DRIVING INFORMATION INTENDED FOR A DRIVER OF A VEHICLE ON A DISPLAY IN SAID VEHICLE.

The invention relates to a method of displaying driving information intended for a driver of a vehicle on a display in said vehicle, said method comprising the displaying of a relevant part of a road map and designations indicating respective roads of said road map.

The above known method is implemented by a coupled car navigation system, whereby a monitor operating according to the vector scan principle is used as a display. The displayed part of the road map, for example a city plan, consists of a number of displayed lines representing roads. The driving information furthermore comprises a vehicle symbol which is displayed in the displayed part of the road map, for example centrally in the lower part of the display screen. When the scale of the displayed part of the road map is suitably selected also part of the destination symbol forming part of the driving information will be displayed. Outside of the displayed part of the road map the display screen also displays symbols indicating the direction of the north and the direction of the destination, i.e. the direction of an imaginary line connecting the vehicle and the destination, as well as the length of said line expressed in kilometres. When driving the position of the vehicle symbol does not change, but the displayed part of the road map rotates. In the housing of the monitor a number of push buttons to be operated by the driver are provided. With one of the push buttons street names can be called, thanks to the vector scan principle, said street names being displayed parallel to the respective line on the monitor representing a street in question. In particular the street names are displayed obliquely on the left and on the right, with the disadvantage that if the driver wants to be able to read various street names he will have to move his head in an undesirable manner, with all its consequences.

The object of the present invention is to obviate the drawback pointed out, and in order to accomplish that objective a method of the kind mentioned in the preamble is provided, which is characterized in that the designations to be displayed are displayed horizontally.

Besides street names said designations may also be road designations, such as road codes, for example A1, E5 or N366, or exit designations, such as exit numbers, for example 31, or exit names, for example a place-name.

The advantage of the invention is therefore that for example the street names can be read horizontally, requiring only a slight movement of the eyes from the left to the right, whereby the head can be kept still, if desired.

Preferably the designations to be displayed, such as one or more street names, are displayed outside of the displayed part of the road map. Not only is this more surveyable, but as a result it is also possible to use an LCD-display.

Also preferably the designation of a next intersecting road is displayed outside of the displayed part of the road map, as the designation to be displayed. The next intersecting road may be one and the same intersecting road, which may have the same name, but which also may have different names. It is also possible that the intersecting road forms part of a T-junction. The term "intersecting" should be interpreted in a broad sense, therefore.

Likewise preferably the designation of the next intersecting road on the left is displayed on the left and the designation of the next intersecting road on the right is displayed on the right, for example outside of the displayed part of the road map, and in the lower part of the display. In the upper part of the road map and outside of the displayed part of the road map the road on which the vehicle is driving and the road of destination may be displayed, possibly together with a destination arrow. Optionally an arrow indicating the north is displayed in the displayed part of the road map, besides the vehicle and destination symbols, as in accordance with the known method. Also the current time may be may be displayed on the display.

Reverting to the feature of the present invention of displaying the names of the next street on the left and the next street on the right, respectively, on the left and on the right of the display, it is also possible that only a name of a side-street on the left, of a side-street on the right, the same street name on the left and on the right, or different names of side-streets on the left and on the right are displayed. Preferably a distinction is moreover made between side-streets which the driver may turn into and side-streets which the driver may not turn into by displaying these in different manners. Preferably said side-streets are displayed in different colours, such as red and white respectively. It would also be possible, however, to display the name of a street which the driver may not turn into in white letters in a red bar, and the name of a street which the driver may drive into in white letters in a blue bar, or vice versa.

It will be apparent to those skilled in the art that the present invention is not exclusively confined to the new method referred to, but that the invention also extends to a car orientation system or a car navigation system arranged for implementing said new method. To those skilled in the art several means will in particular be available for implementing the new method according to the invention into one of the above systems. This implementation will preferably constitute a software implementation.

Also the use of a display, with for example a cathode-ray tube or a liquid crystal display unit, with the method according to the invention falls within the framework of the present invention.

The present invention will be explained in more detail with reference to the drawing, in which:

Figure 1 shows a greatly simplified and generalized block diagram of a car orientation system; and

Figure 2 diagrammatically shows a possible display on a display screen in accordance with one embodiment of the method according to the invention.

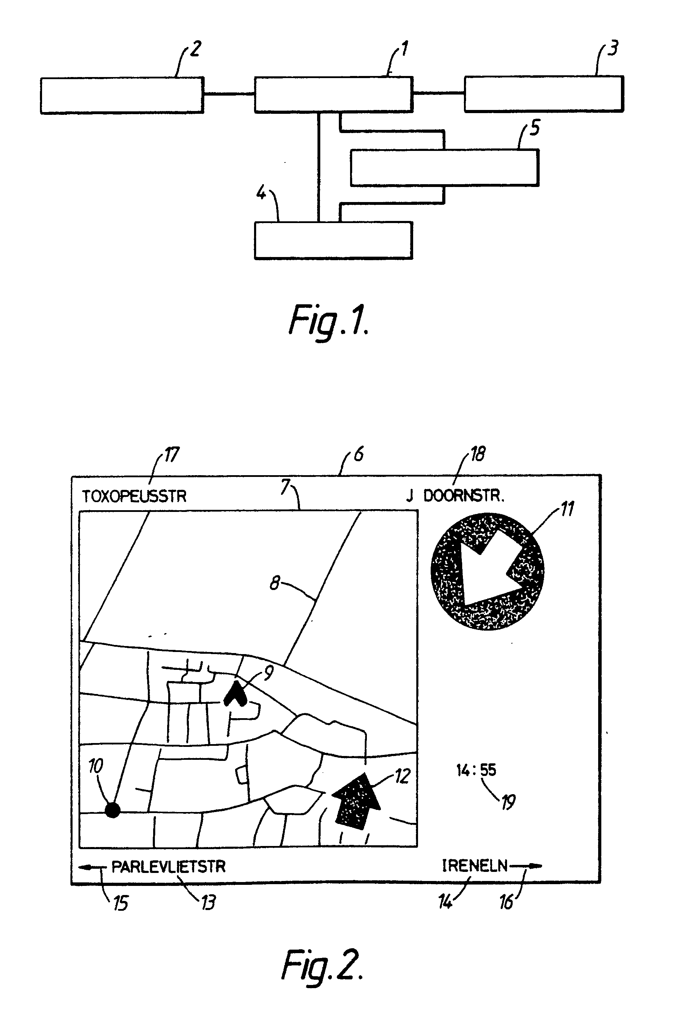

As already said before, Figure 1 shows a greatly simplified block diagram of a car orientation system suitable for implementing a method according to the invention. The invention is not confined to this, however. It may for example also be used in car navigation systems with beacons and with those systems that work with satellite signals. The core of the car orientation system of Figure 1 is formed by a computer 1, which is coupled to wheel sensors 2, a database 3 and a display 4. Finally Figure 1 shows a user interface 5 between the computer 1 and the display 4. In the computer 1 car orientation software is employed. Said software on the one hand works on the data collected by the wheel sensors 2, in accordance with the dead reckoning method, and on the other hand by means of the database 3 according to the map-matching method. The car orientation system illustrated in Figure 1 is an arithmetic implementation, therefore. The database 3 may comprise a metrical file provided with data relevant for a road user, such as street names, road numbers and restrictions as to the direction, as well as information about special locations, such as petrol stations, restaurants, sights and parking facilities. The car orientation system takes care of it that the information stored in the database 3 is transmitted to the display 4 at the appropriate moment. The display 4 may be a colour monitor, whilst the database 3 may comprise a CD-ROM-player. The user interface 5 enables the communication between the user and the car orientation to be such that it is possible to use all features of the system without having to refer to a printed manual, whereby said user interface 5 comprises software and a keyboard (not shown). Said software institutes a direct relation between a key of the keyboard to be used and its function. Referring to Figure 2 the method according to the invention will now be discussed in more detail.

Figure 2 shows the display surface of a display, indicated by reference numeral 6. For the sake of convenience the term display 6 will be used hereinafter. Said display 6 is placed in a vehicle (not shown) and functions as part of a car orientation system or car navigation system for displaying driving information intended for a driver of the vehicle. Said driving information comprises a relevant part 7 of a road map, i.e. a digitized road map or electronic road map, which may for example consist of a city plan, but may also be a road map in a narrower sense. The basis of said road map consists of a network of lines, one of which is indicated by reference numeral 8 in Figure 2. The driving information furthermore comprises designations indicating respective roads, such as 8, of the road map. According to the invention said designations are not displayed parallel to the lines of the displayed relevant part 7 of a road map, as a result of which the designation associated with the line 8 on the right would be oblique, but they are displayed horizontally, as will be explained hereafter. In the balance of the present disclosure it will be assumed that the displayed relevant part 7 of the road map is part of a city plan, so that the roads are streets and the road designations are street names. For other possibilities reference is to be had to the preamble of the description.

As shown in Figure 2, four street names 13, 14, and 17, 18 are displayed on the display 6, outside of the displayed part 7 of the city plan. More in particular the street name 13 is the name of the next side-street on the left, whilst the street name 14 is the next side-street on the right. As can be seen the street name 13 is displayed on the left and the street name 14 is displayed on the right. Left-hand and right-hand arrow symbols 15 and 16 may be displayed as a supplement to the street names 13, 14, respectively. Preferably the street names 13, 14 are displayed in the lower part of the display 6. Possibly the street names 13, 14 are both displayed under the displayed part 7 of the city plan. The street names 17, 18 are displayed in the upper part of the display 6, outside of the displayed part 7 of the city plan. The street name 17 is the street in which the vehicle is driving, whilst the street name 18 is the name of the street of destination. In the displayed part 7 of the city plan a symbol 9 is displayed at a fixed position on the display, said symbol indicating the location of the vehicle related to the city plan, in this case in street 17, therefore, whilst the symbol indicated by reference numeral 10 indicates the destination, the street of destination 18, therefore. In Figure 2 there are finally illustrated an arrow 12 indicating the north and a destination arrow 11, as well as a time indication 19. It will be apparent that, in particular by displaying the street names 13, 14, a faster orientation has become possible for the driver of the vehicle.

One embodiment of a method according to the invention is furthermore characterized in that a designation of a first intersecting road which the driver may not turn into is displayed in a manner different from that in which a designation of a first intersecting road which the driver may turn into is displayed. Thus it is possible, assuming that it is prohibited to turn into the street 14, that the designation of the street 14, which the driver may not turn into, and that of the street 13, which the driver may turn into, are displayed in different colours, for example red and white respectively.

**Claims**

1. A method of displaying driving information intended for a driver of a vehicle on a display in said vehicle, said method comprising the displaying of a relevant part of a road map and designations indicating respective roads of said road map, characterized in that designations to be displayed are displayed horizontally.

2. A method according to claim 1, characterized in that designations to be displayed are displayed outside of the displayed part of the road map.

3. A method according to claim 1 or 2, characterized in that the designation of a first intersecting road is displayed.

4. A method according to claim 3, characterized in that the designation of the next intersecting road on the left is displayed on the left and that the designation of the next intersecting road on the right is displayed on the right.

5. A method according to claim 3 or 4, characterized in that a designation of a next intersecting road which the driver may not turn into is displayed in a manner different from that in which a designation of a next intersecting road which the driver may turn into is displayed.

6. A method according to claim 5, characterized in that the designation of a road which the driver may not turn into, and that of a road which the driver may turn into, are displayed in different colours.

7. A method according to claim 6, characterized in that the designation of a road which the driver may not turn into, and that of a road which the driver may turn into, are displayed in red and white respectively.

8. A method according to any one of the preceding claims, characterized in that said roads are streets and that said designations are street names.

9. A method according to any one of the claims 1 - 7, characterized in that said designations are road or exit designations.

10. Car orientation or navigation system, arranged for carrying out the method according to any one of the preceding claims.

11. The use of a display with the method according to any one of the preceding claims.

**Fig.1.**

TOXOPEUSSTR

J DOORNSTR.

14 : 55

PARLEVLIETSTR

IRENELN

**Fig.2.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 355 232 (AISIN AW CO., LTD)<br>* Page 4, lines 9-20; figure 1 *<br>---- | 1-3,8-11 | G 01 C 21/20 |
| X | EP-A-0 059 435 (NISSAN MOTOR CO., LTD)<br>* Abstract; page 3, lines 4-20; figure 3; page 6, lines 15-24 *<br>---- | 1,10,11 | |
| X | WO-A-8 906 341 (AISIN AW CO., LTD)<br>* Abstract; figure 4; page 13, line 18 - page 14, line 20; page 18, line 8 - page 19, line 23 * & EP-A-346 491 (AISIN AW CO., LTD)<br>---- | 1,2,8-11 | |
| X | PATENT ABSTRACTS OF JAPAN, vol. 13, no. 200 (P-869)[3548], 12th May 1989; & JP-A-1 21 316 (YAZAKI CORP.) 24-01-1989<br>* Whole document *<br>---- | 1,2,10,11 | |
| X | EP-A-0 119 674 (NIPPONDENSO CO., LTD)<br>* Abstract; page 6, line 23 - page 7, line 4; figure 4 *<br>---- | 1,2,10,11 | |
| | | | TECHNICAL FIELDS SEARCHED (Int. Cl.5) |
| A | PATENT ABSTRACTS OF JAPAN, vol. 13, no. 159 (P-858)[3507], 18th April 1989; & JP-A-63 317 715 (NEC HOME ELECTRONICS LTD) 26-12-1988<br>* Whole document *<br>----- | 1,10,11 | G 01 C<br>G 09 B |

The present search report has been drawn up for all claims

| Place of search | Date of completion of the search | Examiner |
|---|---|---|
| THE HAGUE | 15-02-1991 | HUNT J.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P0401)